# FASCICULE DE BREVET EUROPEEN

(11) **EP 3 059 371 B1**
(45) Date de publication et mention de la délivrance du brevet: **24.08.2022**
(21) Numéro de dépôt: 16156623.7
(22) Date de dépôt: 22.02.2016
(51) Int. Cl.: E05F 15/77, G07C 9/00

(54) **PROCÉDÉ D'APPAIRAGE D'UN ACTIONNEUR AVEC AU MOINS UN ÉMETTEUR SANS FIL, PROCÉDÉ DE COMMANDE D'UN ACTIONNEUR ET INSTALLATION DE FERMETURE COMPRENANT UN TEL ACTIONNEUR**
VERFAHREN ZUR KOPPLUNG EINES STELLGLIEDS MIT MINDESTENS EINEM DRAHTLOSEN SENDER, STEUERVERFAHREN EINES STELLGLIEDS UND VERSCHLUSSANLAGE, DIE MINDESTENS EIN SOLCHES STELLGLIED UMFASST
PROCESS FOR PAIRING AN ACTUATOR WITH AT LEAST WIRELESS EMITTER, PROCESS FOR CONTROLLING AN ACTUATOR AND CLOSING INSTALLATION INCLUDING SUCH AN ACTUATOR

(30) Priorité: 23.02.2015 FR 1551533
(43) Date de publication de la demande: 24.08.2016
(73) Titulaire: SIMU, 70100 Arc-Les-Gray (FR)
(72) Inventeur: PAILLERET, Guillaume, 70150 Tromarey (FR)
(74) Mandataire: Lavoix

(56) Documents cités:
- EP-A1- 1 950 722
- WO-A1-2006/000235
- WO-A1-2014/005651
- DE-U1-202014 102 241
- FR-A1- 2 897 708
- US-A1- 2003 016 119
- US-A1- 2006 220 785
- US-A1- 2012 252 509

## Description

L'invention concerne un procédé d'appairage d'un actionneur avec au moins un émetteur sans fil au sein d'une installation de fermeture, comprenant, par exemple, une porte de garage, un portail ou une grille commerciale. Une installation de fermeture comprend généralement un récepteur de signaux émis par un ou plusieurs émetteurs.

Dans le domaine de la domotique, il est connu d'utiliser une installation de fermeture pour fermer sélectivement une entrée, un chemin ou encore un garage. Certaines installations de fermeture peuvent être commandées à distance au moyen d'un émetteur sans fil, à savoir notamment une télécommande. Afin d'éviter un accident de personne, il est connu de bloquer la commande de l'actionneur par l'émetteur, lorsque l'émetteur se trouve au-delà d'une distance prédéterminée, par exemple de l'ordre de dix mètres. Cette fonction permet de garantir la commande à vue de l'installation de fermeture. Elle est parfois qualifiée de « commande homme mort ». Cependant, des dispersions existent dans la chaîne de commande de l'actionneur. Ces dispersions proviennent des tolérances sur la puissance d'émission de l'émetteur et sur la sensibilité du récepteur. Ces dispersions viennent aussi de la présence d'obstacles à la transmission des signaux, comme des arbres ou un mur. La commande à vue de l'installation de fermeture n'est donc pas garantie de manière sécurisée.

Une solution pour limiter la portée des émetteurs est de régler la sensibilité du récepteur avec un potentiomètre. Cependant, étant donné que cette solution s'applique à tous les émetteurs, il n'est pas possible de sélectionner une portée différente pour chaque émetteur. Une autre solution consiste à utiliser un émetteur à portée réduite, sans aucun réglage possible. Dans ce cas, la portée de l'émetteur est prédéterminée et n'est pas ajustable par rapport à la configuration de l'installation de fermeture. Par exemple, une portée maximale sélectionnée à dix mètres n'est pas adaptée pour une porte de garage bien visible à quinze ou vingt mètres. A l'inverse, cette portée nominale de dix mètres n'est pas adaptée à une configuration où l'installation de fermeture n'est visible qu'à cinq mètres, par exemple à cause d'un virage.

Le document DE-U-20 2014 102 241 divulgue un système de commande pour une porte de garage. Le système de commande comprend un récepteur adapté pour recevoir les signaux transmis par un émetteur. Lorsqu'un signal est envoyé à partir de l'émetteur au récepteur, la puissance du signal de commande reçu par le récepteur est comparée avec une valeur seuil enregistrée en mémoire. Si la puissance du signal de commande reçu par le récepteur est inférieure à cette valeur seuil, la commande de l'actionneur par l'émetteur est bloquée. Il n'est pas identifié comment est déterminée cette valeur seuil. Ainsi, il est probable que cette valeur seuil est la même pour toutes les portes de garage. La valeur seuil n'est donc pas ajustée en fonction de la visibilité de la porte de garage et il y a un risque que la commande de la porte du garage ne s'effectue pas à vue.

C'est à ces inconvénients qu'entend plus particulièrement remédier l'invention en proposant un procédé d'appairage d'un actionneur avec au moins un émetteur sans fil, qui permet de garantir une commande de l'installation de fermeture à vue, en toutes circonstances.

On connaît également le document WO 2006/000235 A1 qui décrit un système de fermeture d'une porte. Le système comprend un récepteur prévu pour fonctionner avec plusieurs émetteurs. Le récepteur comprend une unité de traitement pour décoder les signaux envoyés par les émetteurs et une mémoire pour stocker un ou plusieurs codes d'identification. Chaque émetteur a un code qui lui est propre. Les codes d'identification sont stockés en mémoire par apprentissage, au cours duquel le code de chaque émetteur est enregistré en mémoire comme code d'identification. Le système de fermeture ne réagit à un signal envoyé par un émetteur que si le code envoyé par l'émetteur est enregistré en mémoire et si l'émetteur se trouve à une distance inférieure à une distance prédéterminée.

Une nouvelle distance de fonctionnement peut être fixée par un procédé d'apprentissage, lequel consiste à placer l'émetteur à la distance souhaitée et à envoyer un signal de commande. Le récepteur est alors capable d'évaluer la distance à laquelle le signal a été envoyé en mesurant l'amplitude du signal reçu. En pratique, une courbe caractéristique de la puissance du signal en fonction de la distance est programmée en mémoire dans le récepteur. Ainsi, le récepteur est apte à déterminer si un signal a été émis ou non à une distance inférieure à la distance d'activation maximum.

On connaît également le document US 2012/252509 A1 qui décrit une méthode de communication sans fil pour la mise en place de réseaux sans fil ad-hoc entre des stations sans-fil, éventuellement mobiles, et une passerelle vers un réseau fixe.

On connaît également le document WO 2014/005651 A1 qui décrit un dispositif de contrôle de porte d'accès comprenant un détecteur de proximité. Le détecteur de proximité inhibe l'ouverture de la porte d'accès lorsqu'aucun objet n'est détecté à proximité de cette porte.

À cet effet, l'invention concerne un procédé d'appairage d'un actionneur avec au moins un émetteur sans fil au sein d'une installation de fermeture, cette installation de fermeture comprenant un récepteur de signaux émis par l'émetteur. Le procédé comprend au moins les étapes suivantes :
a) placer l'émetteur à une distance déterminée du récepteur et envoyer, à partir de l'émetteur et à destination du récepteur, un signal de configuration initiale, la distance utilisée à l'étape a) étant définie en fonction de la distance maximale souhaitée, entre l'émetteur et le récepteur, pour l'activation de l'actionneur par l'émetteur,
b) au moyen du récepteur, collecter un identifiant de l'émetteur contenu dans le signal de configuration initiale et déterminer la puissance de ce signal,
c) comparer la puissance du signal déterminée à l'étape b) avec une valeur seuil préétablie, la valeur seuil préétablie dépendant d'un seuil de réception du récepteur, ce seuil de réception correspondant à la puissance minimale qu'un signal doit présenter pour pouvoir être reçu par le récepteur, la valeur seuil préétablie étant majorée par rapport au seuil de puissance de réception du récepteur, pour répondre aux normes relatives à la commande homme-mort à partir de l'émetteur,
d) si la puissance du signal déterminée à l'étape b) est supérieure à la valeur seuil préétablie, stocker l'identifiant de l'émetteur et la valeur de cette puissance dans une mémoire associée à l'actionneur, et
e) si la puissance du signal déterminée à l'étape b) est inférieure à la valeur seuil préétablie, rejeter l'émetteur comme non-compatible avec un fonctionnement recherché pour l'installation de fermeture.

Grâce à l'invention, seuls les émetteurs capables d'émettre un signal de commande suffisamment puissant pour être reçu par le récepteur à la distance déterminée sont retenus pour être appairés avec l'actionneur de l'installation de fermeture. Une distance maximale pour activer l'actionneur par l'émetteur peut être fixée lors de l'appairage, dans un périmètre fixé par la valeur seuil préétablie de puissance du signal de configuration initiale. Cette distance maximale est choisie par l'installateur lors de l'appairage de l'émetteur avec l'actionneur, en fonction de la visibilité de l'installation de fermeture et/ou d'autres paramètres, comme la fréquence d'utilisation, le souhait d'utilisation (par exemple depuis un véhicule ou par un piéton), la météo du jour. Ces différents paramètres ont en effet un impact sur la puissance disponible au niveau de l'émetteur lors des utilisations ultérieures. La correspondance entre la distance entre l'émetteur et le récepteur et le niveau de puissance du signal de configuration initiale est également influencée par ces différents paramètres. Ainsi, la distance maximale d'activation d'un actionneur d'une installation de fermeture masquée est choisie plus faible que pour une installation de fermeture dégagée. De la même manière, la distance d'activation maximale sera choisie plus grande si l'utilisateur arrive devant la porte en véhicule plutôt qu'à pied. L'utilisateur muni d'un émetteur appairé avec l'actionneur ne peut pas activer l'actionneur au-delà de la distance déterminée pendant l'appairage, ce qui permet de garantir la commande de l'installation de fermeture à vue. En outre, plusieurs émetteurs peuvent être appairés séparément et avec une distance d'activation maximale différente.

Le rejet de l'émetteur comme non-compatible avec un fonctionnement recherché pour l'installation de fermeture peut simplement signifier que l'installateur doit refaire l'appairage entre cet émetteur et le récepteur à une distance plus proche du récepteur.

Selon des aspects avantageux mais non obligatoires de l'invention, le procédé d'appairage peut comporter une ou plusieurs des caractéristiques suivantes, prises dans toute combinaison techniquement admissible :
- La distance utilisée à l'étape a) est réduite par rapport à la distance maximale souhaitée, entre l'émetteur et le récepteur, pour l'activation de l'actionneur par l'émetteur.
- La distance utilisée à l'étape a) est égale à la distance maximale souhaitée, entre l'émetteur et le récepteur, pour l'activation de l'actionneur par l'émetteur.
- Pour une installation de fermeture avec plusieurs émetteurs, le procédé d'appairage est mis en œuvre pour chaque émetteur, avec une distance déterminée sélectionnée à l'étape a) pour chaque émetteur.
- À l'étape a), tous les émetteurs sont placés à la même distance.
- À l'étape a), les émetteurs sont placés à des distances différentes.
- L'identifiant de l'émetteur comprend un code fixe et un code tournant, alors que le code fixe est stocké dans la mémoire associée à l'actionneur et que le code tournant est changé à chaque étape d) du procédé d'appairage.
- La valeur seuil préétablie est définie en usine et correspond à une distance d'activation pour une installation-type.

L'invention concerne également un procédé de commande d'un actionneur d'une installation de fermeture appairé avec au moins un émetteur suivant un procédé d'appairage comprenant les étapes conformes aux étapes du procédé d'appairage conforme à l'invention, tel que mentionné ci-dessus. Ce procédé comprend les étapes itératives consistant à, pendant une séquence de commande de l'installation de fermeture,
f) collecter l'identifiant de l'émetteur et la puissance d'un signal de commande émis par celui-ci et reçu par le récepteur,
g) vérifier l'authenticité de l'identifiant collecté de l'émetteur, et
h) comparer la puissance du signal de commande reçu par le récepteur avec la puissance du signal de configuration initiale enregistré en mémoire,
i) si la puissance du signal de commande reçu par le récepteur est inférieure à la puissance du signal de configuration initiale, bloquer la commande de l'actionneur par l'émetteur, et
j) si la puissance du signal de commande reçu par le récepteur est supérieure à la puissance du signal de configuration initiale, autoriser la commande de l'actionneur par l'émetteur.

L'invention concerne également une installation de fermeture configurée pour mettre en œuvre les étapes du procédé d'appairage conforme à l'invention, tel que décrit précédemment. L'installation de fermeture comprend un actionneur, au moins un émetteur sans fil, un récepteur de signaux émis par chaque émetteur, des moyens pour collecter un identifiant de chaque émetteur. L'installation de fermeture comprend, en outre, des moyens pour déterminer la puissance d'un signal de configuration initiale, qui est reçu par le récepteur et qui est émis par l'émetteur à une distance déterminée du récepteur, et une mémoire pour stocker l'identifiant de l'émetteur et la puissance du signal de configuration initiale reçu, en fonction du résultat de la comparaison de l'étape c) du procédé d'appairage.

Selon un aspect avantageux mais non obligatoire de l'installation de fermeture configurée pour mettre en œuvre les étapes du procédé de commande conforme à l'invention, tel que décrit précédemment, celle-ci comprend en outre des moyens pour vérifier l'authenticité de l'identifiant collecté de l'émetteur, et des moyens pour comparer la puissance d'un signal de commande reçu par le récepteur de la part de l'émetteur avec la puissance du signal de configuration initiale enregistrée en mémoire pour cet émetteur.

L'invention et d'autres avantages de celle-ci apparaîtront plus clairement à la lumière de la description qui va suivre, d'un mode de réalisation d'un procédé d'appairage, donnée uniquement à titre d'exemple et faite en référence aux dessins annexés dans lesquels :
- la figure 1 est une vue schématique en perspective d'une installation de fermeture comprenant un actionneur, un émetteur et un récepteur de signaux émis par l'émetteur,

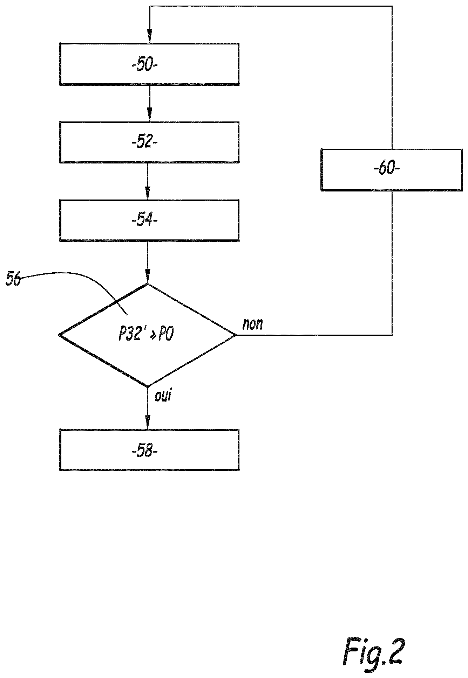

- la figure 2 est un diagramme représentant les différentes étapes de mise en œuvre d'un procédé d'appairage de l'actionneur avec l'émetteur de la figure 1, et
- la figure 3 est un diagramme représentant les différentes étapes de mise en œuvre d'un procédé de commande de l'installation de fermeture de la figure 1.

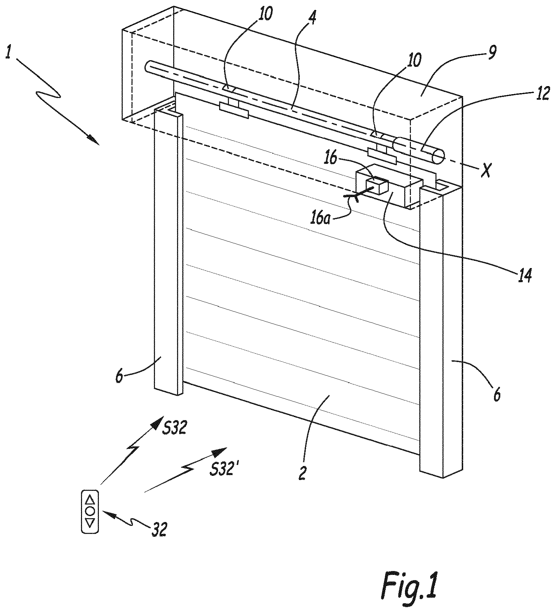

Sur la figure 1 est représentée une installation de fermeture 1 qui, dans l'exemple, est une porte de garage. Cette porte de garage comprend un tablier 2, qui est mobile verticalement et qui est guidé en translation par l'intermédiaire de deux coulisses latérales 6. L'installation de fermeture 1 comprend un caisson 9 disposé en partie supérieure du tablier 2. Le caisson 9 contient un tube 4 d'enroulement du tablier 2. Le tube 4 est entraîné en rotation autour d'un axe horizontal X au moyen d'un actionneur électrique 12. Le tablier 2 est attaché au tube 4 au moyen de crochets 10. L'actionneur électrique 12 est commandé par un émetteur sans fil 32, en l'espèce une télécommande. L'émetteur 32 est configuré par le procédé d'appairage décrit ci-dessous pour être capable de transmettre un signal S32 de commande à un récepteur 16 appartenant à une unité électronique de commande 14, disposée à l'intérieur du caisson 9 et configurée pour piloter l'actionneur 12. L'émetteur 32 communique avec le récepteur 16 par voie radio, c'est-à-dire que le récepteur 16 comporte une antenne 16a, schématiquement représentée à la figure 1. L'émetteur 32 peut être un émetteur radio unidirectionnel, uniquement capable d'émettre des ordres de commande, ou un émetteur radio bidirectionnel, capable également de recevoir des signaux.

Ci-dessous est décrit un procédé d'appairage d'un nouvel émetteur 32 avec l'actionneur 12.

Tout d'abord, dans un mode de configuration, l'installateur place, lors d'une étape 50, l'émetteur 32 à une distance déterminée du récepteur 16 et envoie, lors d'une étape 52, à partir de l'émetteur 32 et à destination du récepteur 16, un signal S32' de configuration initiale. La position de l'émetteur 32 pour envoyer le signal S32' de configuration initiale est choisie par l'installateur, notamment en fonction de la visibilité de l'installation de fermeture 1. Ainsi, la distance à laquelle le signal de configuration initiale est envoyé doit être plus faible pour une installation de fermeture 1 masquée que pour une installation de fermeture 1 dégagée. Une installation de fermeture 1 masquée correspond, par exemple, à une porte de garage située en sortie d'un virage ou derrière des arbres, alors qu'une installation de fermeture 1 dégagée correspond, par exemple, à une porte de garage située au bout d'une allée droite. La position de l'émetteur 32 lors de l'appairage dépend donc de la visibilité de l'installation de fermeture 1. Elle peut également dépendre d'autres paramètres, comme la fréquence d'utilisation, le souhait d'utilisation (par exemple depuis un véhicule ou par un piéton), la météo du jour. Ces différents paramètres ont en effet un impact sur la puissance disponible au niveau de l'émetteur 32 lors des utilisations ultérieures. La correspondance entre la distance entre l'émetteur 32 et le récepteur 16 et le niveau de puissance P32' du signal de configuration initiale S32' est également influencée par ces différents paramètres.

Le signal S32' de configuration initiale est reçu par le récepteur 16 à une étape 54 et contient un identifiant de l'émetteur 32. L'unité électronique de commande 14 collecte cet identifiant et détermine la puissance P32' du signal de configuration initiale S32'. Cette puissance est une puissance radio, parfois qualifiée de niveau ou puissance RSSI, de l'Anglais « Received Signal Strength Indication ».

L'unité électronique de commande 14 compare ensuite, lors d'une étape 56, la puissance du signal S32' de configuration initiale avec une valeur seuil P0 préétablie. Cette valeur seuil préétablie P0 dépend de la sensibilité du récepteur 16, c'est-à-dire du seuil de réception du récepteur 16. Ce seuil de réception correspond à la puissance minimale qu'un signal doit présenter pour pouvoir être reçu par le récepteur 16. Le seuil de réception définit la portée radio entre l'émetteur 32 et le récepteur 16 au-delà de laquelle le signal de configuration initiale S32' de l'émetteur 32 n'est pas ou mal reçu par le récepteur 16. La valeur seuil préétablie P0 instaure au niveau du récepteur 16 un seuil de puissance reçue équivalent à une portée radio réduite par rapport à la portée radio du récepteur 16. La valeur seuil préétablie P0 est définie en usine et correspond à une distance d'activation pour une installation-type et permettant de répondre aux normes relatives à la commande homme-mort à partir d'un émetteur radio. En pratique, cette valeur seuil préétablie P0 est donc majorée par rapport au seuil de puissance de réception du récepteur 16.

Si la puissance P32' du signal de configuration initiale S32' est supérieure à cette valeur seuil préétablie P0, l'identifiant de l'émetteur 32 et la valeur de puissance P32' du signal de configuration initiale S32' sont stockés, lors d'une étape 58, dans une mémoire non représentée associée à l'unité électronique de commande 14, de préférence intégrée à celle-ci. En revanche, si la puissance P32' du signal de configuration initiale S32' est inférieure à la valeur seuil préétablie P0, l'émetteur 32 est rejeté, à une étape 60, car non compatible avec un fonctionnement recherché pour l'installation de fermeture 1. L'installateur doit donc sélectionner un nouvel émetteur 32 plus puissant à appairer avec l'actionneur 12, comme représenté par la boucle de retour en direction de l'étape 50.

La distance du récepteur 16 à laquelle l'émetteur 32 est placé pour envoyer le signal S32' de configuration initiale correspond en pratique à la distance maximale souhaitée, entre l'émetteur 32 et le récepteur 16, pour l'activation de l'actionneur 12 par l'émetteur 32.

Selon une variante non représentée, le procédé d'appairage ci-dessus peut être répété ultérieurement pour modifier la valeur de puissance P32' associée à un émetteur 32 dont l'identifiant est déjà stocké en mémoire. Si les conditions de l'étape d) sont remplies, la nouvelle valeur de puissance P32' associée à l'émetteur 32 est stockée à la place de l'ancienne valeur P32'.

Dans le cas où la puissance déterminée P32' du signal de configuration initiale S32' à l'étape b) est inférieure à la valeur seuil P0 préétablie, le rejet de l'émetteur 32 comme non-compatible avec un fonctionnement recherché pour l'installation de fermeture 1 peut simplement signifier que l'installateur doit refaire l'appairage entre cet émetteur 32 et le récepteur 16 à une distance plus proche du récepteur 16. Une information spécifique au niveau du récepteur 16, par exemple un actionnement bref de la porte, ou au niveau de l'émetteur 32 si celui-ci est bidirectionnel, peut signaler ce cas de rejet à l'installateur.

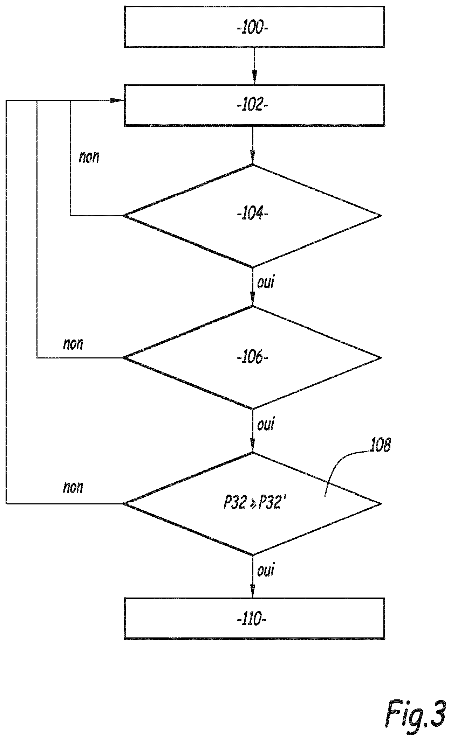

Ci-dessous est décrit, en référence à la figure 3, un procédé de commande de l'actionneur 12 appairé avec l'émetteur 32 conformément au procédé décrit ci-dessus.

Sur la figure 3, l'étape 100 correspond au démarrage du récepteur 16. Lorsque l'utilisateur initie une séquence de commande de l'installation de fermeture 1, il agit sur l'émetteur 32 pour envoyer un signal S32 de commande au récepteur 16. Ce signal de commande S32 est reçu par le récepteur 16, lors d'une étape 102. En pratique, l'utilisateur doit exercer sur l'émetteur 32 une action continue pendant toute la séquence de commande de l'actionneur 12, c'est-à-dire que l'utilisateur doit maintenir un bouton d'actionnement de l'émetteur 32 enfoncé pour ouvrir ou fermer complètement la porte 2. L'émetteur 32 envoie alors des signaux de commande S32 tant que le bouton d'actionnement de l'émetteur 32 est enfoncé. Si l'utilisateur relâche le bouton, la commande de l'actionneur 12 par l'émetteur 32 est bloquée et le mouvement du tablier 2 est stoppé. Ainsi, l'émetteur 32 envoie, pendant toute la phase de commande, des signaux de commande successifs S32 au récepteur 16. Le procédé de commande comprend donc des étapes itératives 104 à 108 mises en œuvre à chaque nouveau signal émis par l'émetteur 32 et reçu par le récepteur 16, c'est-à-dire que le procédé est répété à chaque nouveau signal de commande S32 reçu par le récepteur 16 à l'étape 102.

A l'étape 102, le récepteur 16 collecte l'identifiant de l'émetteur 32 et la puissance P32 du signal de commande S32 émis par celui-ci et reçu par le récepteur 16 est déterminée. L'authenticité de l'identifiant collecté de l'émetteur 32 est ensuite vérifiée aux étapes 104 et 106. L'identifiant de l'émetteur 32 est un code comprenant un code fixe et un code tournant. Le code fixe est une adresse enregistrée dans la mémoire associée à l'unité électronique de commande 14, alors que le code tournant est généré à chaque nouvelle utilisation de l'émetteur 32. L'étape 104 consiste à vérifier que l'adresse de l'émetteur 32 est bien enregistrée dans la mémoire associée à l'actionneur 12. Si l'adresse est enregistrée, le procédé de commande continue. L'étape 106 consiste quant à elle à vérifier que le code tournant est correct. Le code tournant est généré au moyen d'un générateur de code intégré à l'émetteur 32. Le même générateur de code est intégré à l'unité électronique de commande 14 de l'actionneur 12. Ainsi, si les codes tournants générés respectivement par l'unité électronique de commande 14 et par l'émetteur 32 correspondent, le code tournant transmis par l'émetteur 32 est correct et le procédé de commande continue.

Si l'adresse de l'émetteur 32 n'est pas enregistrée en mémoire ou si le code fixe ou tournant transmis par l'émetteur 32 au récepteur 16 est incorrect, cela signifie que l'émetteur 32 utilisé n'est pas prévu pour fonctionner avec l'actionneur 12 car il n'a pas été appairé avec l'actionneur 12 lors de la configuration initiale. Ainsi, le procédé de commande s'arrête et la commande en déplacement du tablier 2 par l'actionneur 12 est bloquée. En pratique, le procédé de commande s'arrête au moins jusqu'à la réception du signal de commande S32 suivant, comme représenté par les flèches retour allant des étapes 104 et 106 à l'étape 102 de réception d'un nouveau signal de commande S32.

Une étape suivante 108, mise en œuvre par l'unité électronique de commande 14 de l'actionneur 12, consiste à comparer la puissance P32 du signal de commande S32 reçu par le récepteur 16 avec la puissance P32' du signal de configuration initiale S32' enregistrée en mémoire lors de l'appairage. Si au cours du procédé de commande, la puissance P32 du signal de commande S32 reçu par le récepteur 16 est inférieure à la puissance P32' du signal de configuration initiale S32', cela signifie que l'émetteur 32 se trouve à une distance du récepteur 16 plus importante que la distance choisie par l'installateur lors de l'appairage, par exemple, parce que l'utilisateur s'est éloigné du récepteur 16 au-delà de la distance maximale en mémoire. Dans ce cas, la commande ne pourrait pas s'effectuer avec une bonne visibilité sur l'installation de fermeture 1.

Pour éviter un accident de personne et donc par sécurité, la commande de l'actionneur 12 par l'émetteur 32 est bloquée, au moins jusqu'à la réception du signal de commande S32 suivant, comme représenté par la flèche retour entre l'étape de comparaison 108 et l'étape de réception 102. L'utilisateur doit donc rester à proximité du récepteur 16 pendant toute la séquence d'ouverture ou de fermeture de l'installation de fermeture 1. Cela garantit une commande à vue de l'installation de fermeture 1. L'utilisateur peut alors intervenir en cas de problème, par exemple si une personne ou un objet se trouve en dessous du tablier 2 lors de la fermeture. Cela correspond donc à une installation de fermeture 1 avec « commande homme-mort ».

En revanche, si la puissance P32 du signal de commande S32 reçu par le récepteur 16 est supérieure ou égale à la puissance P32' du signal de configuration initiale S32', cela signifie que l'émetteur 32 se trouve à une distance du récepteur 16 plus proche que celle choisie par l'installateur lors de l'appairage. La commande de l'actionneur 12 par l'émetteur 32 est autorisée et le tablier 2 est commandé en déplacement par l'actionneur 12, lors d'une étape 110, au moins jusqu'à réception d'un nouveau signal de commande S32.

En variante non représentée, l'installation de fermeture 1 est un portail électrique, une barrière ou une grille commerciale.

Selon une autre variante non représentée, le même procédé d'appairage peut être utilisé pour une installation de fermeture 1 avec plusieurs émetteurs 32. Dans ce cas, un procédé d'appairage est mis en œuvre séparément pour chaque émetteur 32, avec une distance déterminée qui peut être égale ou différente pour tous les émetteurs 32.

Selon une autre variante non représentée, l'émetteur 32 envoie automatiquement, pendant toute la phase de commande, des signaux de commande successifs S32 au récepteur 16, de sorte que l'utilisateur n'a pas à appuyer en continu sur un bouton de l'émetteur 32, en particulier de la télécommande. Le procédé de commande comprend donc des étapes itératives 104 à 108 mises en œuvre à chaque nouveau signal émis par l'émetteur 32 et reçu par le récepteur 16, c'est-à-dire que le procédé est répété à chaque nouveau signal de commande S32 reçu par le récepteur 16 à l'étape 102.

Selon une autre variante non représentée, l'unité électronique de commande 14 est capable de détecter lorsque les piles de l'émetteur 32 sont changées, en particulier par le changement d'une partie de la trame du signal de commande S32 émis par l'émetteur 32, de sorte à spécifier l'état des piles. En effet, la puissance P32 du signal émis par l'émetteur 32 est plus importante lorsque les piles sont neuves que lorsqu'elles sont usées. Ainsi, si le récepteur 16 reçoit un signal de commande S32 dans lequel la partie de la trame associée à l'état des piles est remplacée par une valeur plus élevée, l'unité électronique 14 en déduit que les piles ont été changées et majore la puissance P32' du signal de configuration initiale S32' enregistrée en mémoire lors de l'appairage. Il s'agit alors d'un ajustement automatique de la valeur de puissance P32' du signal de configuration initiale S32'. Par exemple, la puissance du signal de configuration initiale S32' peut être majorée de 20% ou 50% ou de manière mathématique en utilisant l'information relative à l'état des piles contenue dans la trame. Cela permet d'éviter qu'un utilisateur muni d'un émetteur 32 à piles neuves puisse commander l'actionneur 12 par l'émetteur 32 au-delà de la distance prévue par l'installateur. L'ajustement automatique peut également permettre de compenser une dégradation de l'état des piles. Toutefois, la puissance P32' du signal de configuration initiale S32' ne peut être minorée en deçà de la valeur seuil préétablie P0.

Selon une autre variante non représentée, la distance du récepteur 16 à laquelle l'émetteur 32 est placé pour envoyer le signal de configuration initiale S32' ne correspond pas à la distance maximale souhaitée, entre l'émetteur 32 et le récepteur 16, pour l'activation de l'actionneur 12 par l'émetteur 32, mais à une distance plus réduite. La distance maximale souhaitée peut ainsi, pour plus de sécurité, être minorée pour définir la distance à laquelle le signal de configuration initiale S32' est envoyé et la distance à laquelle les signaux de commande devront être émis ultérieurement.

Selon une autre variante non représentée, le procédé d'appairage comprend une réitération de l'étape a) de positionnement de l'émetteur 32 à une distance déterminée du récepteur 16 et d'envoi du signal S32' de configuration initiale, de l'étape b) de collecte d'un identifiant d'émetteur 32 contenu dans un signal de configuration initiale S32' et de détermination de la puissance P32' de ce signal S32' et de l'étape c) de comparaison de la puissance P32' déterminée du signal de configuration initiale S32' avec la valeur seuil P0 préétablie, avant de permettre le stockage de l'identifiant de l'émetteur 32 et d'une valeur moyenne des puissances P32' associées reçues par le récepteur 16. Cette réitération peut être mise en œuvre par un double appui sur l'émetteur 32, permettant l'envoi de deux signaux de configuration initiaux S32' consécutifs, par exemple à partir de deux positions différentes vis-à-vis de la porte à commander. Ceci permet de sécuriser l'apprentissage de la valeur de puissance P32' du signal de configuration initiale S32'.

Les caractéristiques des variantes et modes de réalisation envisagés ci-dessus peuvent être combinées entre elles pour générer de nouveaux modes de réalisation, sans sortir du cadre de l'invention défini par les revendications.

## Revendications

1. Procédé d'appairage d'un actionneur (12) avec au moins un émetteur sans fil (32) au sein d'une installation de fermeture (1), cette installation (1) comprenant un récepteur (16) de signaux (S32, S32') émis par l'émetteur (32), le procédé comprenant au moins les étapes suivantes :
a) placer (50) l'émetteur (32) à une distance déterminée du récepteur (16) et envoyer (52), à partir de l'émetteur (32) et à destination du récepteur (16), un signal (S32') de configuration initiale, la distance utilisée à l'étape a) étant définie en fonction de la distance maximale souhaitée, entre l'émetteur (32) et le récepteur (16), pour l'activation de l'actionneur (12) par l'émetteur (32),
b) au moyen du récepteur (16), collecter (54) un identifiant de l'émetteur (32) contenu dans le signal de configuration initiale (S32') et déterminer (54) la puissance (P32') de ce signal (S32'),
c) comparer (56) la puissance (P32') du signal (S32') déterminée à l'étape b) avec une valeur seuil (P0) préétablie, la valeur seuil (P0) préétablie dépendant d'un seuil de réception du récepteur (16), ce seuil de réception correspondant à la puissance minimale qu'un signal doit présenter pour pouvoir être reçu par le récepteur (16), la valeur seuil (P0) préétablie étant majorée par rapport au seuil de puissance de réception du récepteur (16), pour répondre aux normes relatives à la commande homme-mort à partir de l'émetteur (32),
d) si la puissance (P32') du signal (S32') déterminée à l'étape b) est supérieure à la valeur seuil (P0) préétablie, stocker (58) l'identifiant de l'émetteur (32) et la valeur de cette puissance (P32') dans une mémoire associée à l'actionneur (12), et
e) si la puissance (P32') du signal (S32') déterminée à l'étape b) est inférieure à la valeur seuil (P0) préétablie, rejeter (60) l'émetteur (32) comme non-compatible avec un fonctionnement recherché pour l'installation (1).

2. Procédé d'appairage selon la revendication 1, **caractérisé en ce que** la distance utilisée à l'étape a) est réduite par rapport à la distance maximale souhaitée, entre l'émetteur (32) et le récepteur (16), pour l'activation de l'actionneur (12) par l'émetteur (32).

3. Procédé d'appairage selon la revendication 1, **caractérisé en ce que** la distance utilisée à l'étape a) est égale à la distance maximale souhaitée, entre l'émetteur (32) et le récepteur (16), pour l'activation de l'actionneur (12) par l'émetteur (32).

4. Procédé d'appairage pour une installation (1) avec plusieurs émetteurs (32), **caractérisé en ce qu'**un procédé d'appairage selon l'une quelconque des revendications précédentes est mis en œuvre pour chaque émetteur (32), avec une distance déterminée sélectionnée à l'étape a) pour chaque émetteur (32).

5. Procédé d'appairage selon la revendication 4, **caractérisé en ce que**, à l'étape a), tous les émetteurs (32) sont placés à la même distance.

6. Procédé d'appairage selon la revendication 4, **caractérisé en ce que**, à l'étape a), les émetteurs (32) sont placés à des distances différentes.

7. Procédé d'appairage selon l'une quelconque des revendications 1 à 6, **caractérisé en ce que** l'identifiant de l'émetteur (32) comprend un code fixe et un code tournant, **en ce que** le code fixe est stocké dans la mémoire associée à l'actionneur (12) et **en ce que** le code tournant est changé à chaque étape d).

8. Procédé d'appairage selon l'une quelconque des revendications 1 à 7, **caractérisé en ce que** la valeur seuil (P0) préétablie est définie en usine et correspond à une distance d'activation pour une installation-type.

9. Procédé de commande d'un actionneur (12) d'une installation de fermeture (1) appairé avec au moins un émetteur (32) suivant un procédé d'appairage comprenant les étapes conformes aux étapes de la revendication 1, le procédé comprenant les étapes itératives consistant à, pendant une séquence de commande de l'installation (1),
f) collecter (102) l'identifiant de l'émetteur (32) et la puissance (P32) d'un signal de commande (S32) émis par celui-ci et reçu par le récepteur (16),
g) vérifier (104, 106) l'authenticité de l'identifiant collecté de l'émetteur (32), et
h) comparer (108) la puissance (P32) du signal de commande reçu par le récepteur (16) avec la puissance (P32') du signal de configuration initiale (S32') enregistré en mémoire,
i) si la puissance (P32) du signal de commande (S32) reçu par le récepteur (16) est inférieure à la puissance (P32') du signal de configuration initiale (S32'), bloquer la commande de l'actionneur (12) par l'émetteur (32), et
j) si la puissance (P32) du signal de commande (S32) reçu par le récepteur (16) est supérieure à la puissance (P32') du signal de configuration initiale (S32'), autoriser (110) la commande de l'actionneur (12) par l'émetteur (32).

10. Installation de fermeture (1) configurée pour mettre en œuvre les étapes du procédé d'appairage conforme à l'une quelconque des revendications 1 à 8, l'installation de fermeture (1) comprenant :
- un actionneur (12),
- au moins un émetteur sans fil (32),
- un récepteur (16) des signaux (S32, S32') émis par chaque émetteur (32),
- des moyens pour collecter un identifiant de chaque émetteur (32),
- des moyens (14) pour déterminer la puissance (P32') d'un signal de configuration initiale (S32'), qui est reçu par le récepteur (16) et qui est émis par l'émetteur (32) à une distance déterminée du récepteur (16), et
- une mémoire pour stocker l'identifiant de l'émetteur et la puissance du signal de configuration initiale (S32') reçu, en fonction du résultat de la comparaison de l'étape c) du procédé d'appairage.

11. Installation de fermeture (1) selon la revendication 10 et configurée pour mettre en œuvre les étapes du procédé de commande conforme à la revendication 9, l'installation de fermeture (1) comprenant en outre :
- des moyens (14) pour vérifier l'authenticité de l'identifiant collecté de l'émetteur (32), et
- des moyens (14) pour comparer la puissance (P32) d'un signal de commande (S32) reçu par le récepteur (16) de la part de l'émetteur (32) avec la puissance (P32') du signal de configuration initiale (S32') enregistrée en mémoire pour cet émetteur (32).

## Patentansprüche

1. Paarungsverfahren eines Aktuators (12) mit mindestens einem drahtlosen Sender (32) innerhalb einer Schließanlage (1), diese Anlage (1) umfassend einen Empfänger (16) für Signale (S32, S32'), die von dem Sender (32) gesendet werden, das Verfahren umfassend mindestens die folgenden Schritte:
a) Platzieren (50) des Senders (32) in einem bestimmten Abstand vom Empfänger (16) und Senden (52) eines Signals (S32') zur anfänglichen Konfiguration von dem Sender (32) zu dem Empfänger (16), wobei der in Schritt a) verwendete Abstand abhängig von dem gewünschten maximalen Abstand zwischen dem Sender (32) und dem Empfänger (16) zur Aktivierung des Aktuators (12) durch den Sender (32) definiert ist,
b) mittels des Empfängers (16), Sammeln (54) einer Kennung des Senders (32), die in dem anfänglichen Konfigurationssignal (S32') enthalten ist, und Bestimmen (54) der Leistung (P32') dieses Signals (S32'),
c) Vergleichen (56) der Leistung (P32') des in Schritt b) bestimmten Signals (S32') mit einem voreingestellten Schwellenwert (P0), wobei der voreingestellte Schwellenwert (P0) von einem Empfangsschwellenwert des Empfängers (16) abhängt, wobei dieser Empfangsschwellenwert der Mindestleistung entspricht, die ein Signal aufweisen muss, um von dem Empfänger (16) empfangen werden zu können, wobei der voreingestellte Schwellenwert (P0) im Vergleich zu dem Empfangsleistung-Schwellenwert des Empfängers (16) erhöht wird, um den Normen in Bezug auf die Totmannsteuerung anhand des Senders (32) zu entsprechen,
d) wenn die in Schritt b) bestimmte Leistung (P32') des Signals (S32') größer ist als der voreingestellte Schwellenwert (P0), Speichern (58) der Kennung des Senders (32) und des Werts dieser Leistung (P32') in einem Speicher, der mit dem Aktuator (12) assoziiert ist, und
e) wenn die in Schritt b) bestimmte Leistung (P32') des Signals (S32') kleiner ist als der voreingestellte Schwellenwert (P0), Ablehnen (60) des Senders (32) als nicht kompatibel mit einem angestrebten Betrieb für die Anlage (1).

2. Paarungsverfahren nach Anspruch 1, **dadurch gekennzeichnet, dass** der in Schritt a) verwendete Abstand im Vergleich zu dem gewünschten maximalen Abstand zwischen dem Sender (32) und dem Empfänger (16) zur Aktivierung des Aktuators (12) durch den Sender (32) verringert wird.

3. Paarungsverfahren nach Anspruch 1, **dadurch gekennzeichnet, dass** der in Schritt a) verwendete Abstand gleich ist wie der gewünschte maximale Abstand zwischen dem Sender (32) und dem Empfänger (16) zur Aktivierung des Aktuators (12) durch den Sender (32).

4. Paarungsverfahren für eine Anlage (1) mit mehreren Sendern (32), **dadurch gekennzeichnet, dass** ein Paarungsverfahren nach einem der vorherigen Ansprüche für jeden Sender (32) implementiert wird, wobei in Schritt a) für jeden Sender (32) ein bestimmter Abstand ausgewählt wird.

5. Paarungsverfahren nach Anspruch 4, **dadurch gekennzeichnet, dass** in Schritt a) alle Sender (32) in dem gleichen Abstand angeordnet werden.

6. Paarungsverfahren nach Anspruch 4, **dadurch gekennzeichnet, dass** in Schritt a) die Sender (32) in unterschiedlichen Abständen angeordnet werden.

7. Paarungsverfahren nach einem der Ansprüche 1 bis 6, **dadurch gekennzeichnet, dass** die Kennung des Senders (32) einen festen Code und einen rotierenden Code umfasst, dass der feste Code in dem Speicher gespeichert ist, der mit dem Aktuator (12) assoziiert ist und dass der rotierende Code in jedem Schritt d) geändert wird.

8. Paarungsverfahren nach einem der Ansprüche 1 bis 7, **dadurch gekennzeichnet, dass** der voreingestellte Schwellenwert (P0) werkseitig festgelegt ist und einem Aktivierungsabstand für eine typische Anlage entspricht.

9. Steuerungsverfahren eines Aktuators (12) einer Schließanlage (1), der mit mindestens einem Sender (32) gepaart ist, gemäß einem Paarungsverfahren, umfassend die Schritte gemäß den Schritten von Anspruch 1, das Verfahren umfassend die iterativen Schritte, während einer Steuersequenz der Anlage (1), die aus Folgendem bestehen
f) Sammeln (102) der Kennung des Senders (32) und der Leistung (P32) eines Steuersignals (S32), das von diesem gesendet und von dem Empfänger (16) empfangen wird,
g) Überprüfen (104, 106) der Authentizität der gesammelten Kennung des Senders (32), und
h) Vergleichen (108) der Leistung (P32) des von dem Empfänger (16) empfangenen Steuersignals mit der Leistung (P32') des in dem Speicher gespeicherten anfänglichen Konfigurationssignals (S32'),
i) wenn die Leistung (P32) des von dem Empfänger (16) empfangenen Steuersignals (S32) niedriger ist als die Leistung (P32') des anfänglichen Konfigurationssignals (S32'), Blockieren der Steuerung des Aktuators (12) durch den Sender (32), und
j) wenn die Leistung (P32) des von dem Empfänger (16) empfangenen Steuersignals (S32) höher ist als die Leistung (P32') des anfänglichen Konfigurationssignals (S32'), Genehmigen (110) der Steuerung des Aktuators (12) durch den Sender (32).

10. Schließanlage (1), die konfiguriert ist, um die Schritte des Paarungsverfahrens gemäß einem der Ansprüche 1 bis 8 zu implementieren, die Schließanlage (1) umfassend:
- einen Aktuator (12),
- mindestens einen drahtlosen Sender (32),
- einen Empfänger (16) von Signalen (S32, S32'), die von jedem Sender (32) gesendet werden,
- Einrichtungen zum Sammeln einer Kennung von jedem Sender (32),
- Einrichtungen (14) zum Bestimmen der Leistung (P32') eines anfänglichen Konfigurationssignals (S32'), das von dem Empfänger (16) empfangen und von dem Sender (32) in einem bestimmten Abstand von dem Empfänger (16) gesendet wird, und
- einen Speicher zum Speichern der Kennung des Senders und der Stärke des empfangenen anfänglichen Konfigurationssignals (S32'), abhängig von dem Resultat des Vergleichs in Schritt c) des Paarungsverfahrens.

11. Schließanlage (1) nach Anspruch 10 und die konfiguriert ist, um die Schritte des Steuerungsverfahrens nach Anspruch 9 zu implementieren, die Schließanlage (1) ferner umfassend:
- Einrichtungen (14) zum Überprüfen der Authentizität der von dem Sender (32) gesammelten Kennung, und
- Einrichtungen (14) zum Vergleichen der Leistung (P32) eines deaktivierten Signals (S32), das der Empfänger (16) von dem Sender (32) empfängt, mit der Leistung (P32') des anfänglichen Konfigurationssignals (S32'), das für diesen Sender (32) in dem Speicher gespeichert ist.

## Claims

1. A method for pairing an actuator (12) with at least one wireless transmitter (32) within a closing installation (1), this installation (1) comprising a receiver (16) receiving signals (S32, S32') transmitted by the transmitter (32), the method comprising at least the following steps:
a) placing (50) the transmitter (32) at a determined distance from the receiver (16) and sending (52), from the transmitter (32) and to the receiver (16), an initial configuration signal (S32'), the distance used at step a) being defined as a function of the maximum desired distance, between the transmitter (32) and the receiver (16), for the activation of the actuator (12) by the transmitter (32),
b) using the receiver (16), collecting (54) an identifier of the transmitter (32) contained in the initial configuration signal (S32') and determining (54) the power (P32') of that signal (S32'),
c) comparing (56) the power (P32') of the signal (S32') determined in step b) with a pre-established threshold value (P0), the pre-established threshold value (P0) depending on a reception threshold of the receiver (16), this reception threshold corresponding to the minimum power that a signal must have to be able to be received by the receiver (16), the pre-established threshold value (P0) being increased relative to the reception power threshold of the receiver (16), to meet the standards relative to the dead man control from the transmitter (32),
d) if the power (P32') of the signal (S32') determined in step b) is above the pre-established threshold value (P0), storing (58) the identifier of the transmitter (32) and the value of this power (P32') in a memory associated with the actuator (12), and
e) if the power (P32') of the signal (S32') determined in step b) is below the pre-established threshold value (P0), rejecting (60) the transmitter (32) as being incompatible with a desired operation for the installation (1).

2. The pairing method according to claim 1, **characterized in that** the distance used in step a) is reduced relative to the maximum desired distance, between the transmitter (32) and the receiver (16), for the activation of the actuator (12) by the transmitter (32).

3. The pairing method according to claim 1, **characterized in that** the distance used in step a) is equal to the maximum desired distance, between the transmitter (32) and the receiver (16), for the activation of the actuator (12) by the transmitter (32).

4. A method for pairing an installation (1) with several transmitters (32), **characterized in that** a pairing method according to any one of the preceding claims is implemented for each transmitter (32), with a determined distance selected in step a) for each transmitter (32).

5. The pairing method according to claim 4, **characterized in that**, in step a), all of the transmitters (32) are placed at the same distance.

6. The pairing method according to claim 4, **characterized in that**, in step a), the transmitters (32) are placed at different distances.

7. The pairing method according to any one of claims 1 to 6, **characterized in that** the identifier of the transmitter (32) comprises a fixed code and a revolving code, **in that** the fixed code is stored in the memory associated with the actuator (12) and **in that** the revolving code is changed upon each step d).

8. The pairing method according to any one of claims 1 to 7, **characterized in that** pre-established threshold value (P0) is defined in the factory and corresponds to an activation distance for a standard installation.

9. A method for controlling an actuator (12) of a closing installation (1) paired with at least one transmitter (32) according to a pairing method comprising the steps according to the steps of claim 1, the method comprising the iterative steps consisting, during a control sequence of the installation (1), of:
f) collecting (102) the identifier of the transmitter (32) and the power (P32) of a control signal (S32) transmitted by the latter and received by the receiver (16),
g) verifying (104, 106) the authenticity of the identifier collected from the transmitter (32), and
h) comparing (108) the power (P32) of the control signal received by the receiver (16) with the power (P32') of the initial configuration signal (S32') saved in memory,
i) if the power (P32) of the control signal (S32) received by the receiver (16) is lower than the power (P32') of the initial configuration signal (S32'), blocking the control of the actuator (12) by the transmitter (32), and
j) if the power (P32) of the control signal (S32) received by the receiver (16) is higher than the power (P32') of the initial configuration signal (S32'), allowing (110) the control of the actuator (12) by the transmitter (32).

10. A closing installation (1) configured to carry out the steps of the pairing method according to any one of claims 1 to 8, the closing installation (1) comprising:
- an actuator (12),
- at least one wireless transmitter (32),
- a receiver (16) for receiving signals (S32, S32') transmitted by each transmitter (32),
- means for collecting an identifier of each transmitter (32),
- means (14) for determining the power (P32') of an initial configuration signal (S32'), which is received by the receiver (16) and which is transmitted by the transmitter (32) at a determined distance from the receiver (16), and
- a memory for storing the identifier of the transmitter and the power of the received initial configuration signal (S32'), based on the result of the comparison of step c) of the pairing method.

11. The closing installation (1) according to claim 10 and configured to carry out the steps of the control method according to claim 9, the closing installation (1) further comprising:
- means (14) for verifying the authenticity of the identifier collected from the transmitter (32), and
- means (14) for comparing the power (P32) of a control signal (S32) received by the receiver (16) from the transmitter (32) with the power (P32') of the initial configuration signal (S32') saved in memory for said transmitter (32).
